Europäisches Patentamt

European Patent Office

Office européen des brevets

(11) Publication number: **0 212 013**
A2

# (12) EUROPEAN PATENT APPLICATION

(21) Application number: 85305557.2

(22) Date of filing: 05.08.85

(51) Int. Cl.⁴: **B 29 C  45/00**, B 29 C  45/36

(43) Date of publication of application: 04.03.87
Bulletin 87/10

(84) Designated Contracting States: CH DE FR GB IT LI NL

(71) Applicant: **VERNAY LABORATORIES,INC., 116 South College Street PO Box 310, Yellow Springs Ohio 45387 (US)**

(72) Inventor: **Boehmer, Dennis A., 862 Donham Drive Xenia, Ohio 45385 (US)**

(74) Representative: **Warren, Keith Stanley et al, BARON & WARREN 18 South End Kensington, London W8 5BU (GB)**

(54) Method for forming a molded elastomeric article.

(57) A method for forming a molded elastomeric article (36) having a small diameter hole comprises the steps of selecting a relatively fine filament (32) made of an effectively nonattenuable material having a relatively high tensile strength, placing the filament under tension in a mold (12, 16), injecting elastomeric material into the mold about the filament (32) so that the filament is embedded in the material, curing the material to form a molded article (36), and drawing the filament from the molded article completely such that a hole is formed therethrough. The elastomeric material may subsequently be separated into wafers, each having a hole formed therethrough of a predetermined and accurate size.

0212013

-1-

METHOD FOR FORMING A MOLDED ELASTOMERIC ARTICLE

The present invention relates to methods for forming articles from elastomeric materials having a relatively high viscosity in the uncured state, and in particular, methods for forming elastomeric articles to have a small diameter hole therethrough of a predetermined and consistently accurate size.

Flow restrictors are frequently used in fluidic systems having small diameter lines. Such flow restrictors consist of a disc of material mounted within the line and having a hole formed therethrough of a diameter on the order of 0.003 to 0.020 inches (0.0762 mm to 0.508 mm). An application of such a restrictor in a pneumatic system is in an automotive spark delay valve.

One type of fluidic restrictor is a flow control. Typically, a flow control is a disc-shaped wafer made of an elastomeric material. The wafer has a hole formed through its center which may be as small as 0.020 inches (0.508 mm) in diameter. In one application, a flow control is positioned against a section of conduit having a conical or tapered seat. The control deforms to the shape of the seat in response to a predetermined flow pressure of fluid within the conduit, thereby diminishing the diameter of the hole to restrict flow. Flow controls of this design are commonly used in appliances such as domestic dishwashers, washing machines, and ice makers.

Such elastomeric flow controls usually are formed by injecting the uncured elastomer into a mold having a core pin attached to one of the mold halves and extending toward the other mold half, curing the elastomer, then

-2-

withdrawing the article from the mold. The core pin extends through the mold where the hole is desired. For small flow controls having small holes, core pins having an appropriately small diameter are needed but are extremely delicate and often bend or break as the cured article is removed.

Molding elastomeric articles with holes less than 0.020 inches (0.508 mm) in diameter using this process is highly impractical due to the delicacy of the core pin required to form such a small hole and the properties of uncured elastomers. The elastomers used to make flow controls, such as fluorosilicones, silicones, nitriles, E-P rubbers, and fluorocarbons, are solids in the uncured state, and have relatively high viscoscities, typically on the order of 2 to 20 in.-lbs. (3.32 to 33.2 kg-m) torque, as measured on an oscillating disc rheometer. As a result, it is necessary to force such uncured elastomers into a mold under relatively high pressures, typically between 1000 and 3000 psi (703 and 2109 kg/sq. cm). The force of such a viscous, uncured elastomer, when injected into a mold at such high pressures, is sufficient to bend or break the relatively fine core pins needed to form flow controls with holes less than 0.020 inches (0.508 mm)in diameter.

Another method of forming a relatively small hole in a molded article is disclosed in Peeso, Jr. U.S. Patent No. 3,608,036. In Peeso, Jr., a plurality of flexible, attenuable filaments are strung between notches in a pair of plates in an open mold. A liquid resin is then poured into the mold and is hardened. The filaments are removed from the hardened resin by applying a tensile force to

-3-

them, which causes them to attenuate in diameter and pull away from the resin matrix so that they can be pulled out of the hardened resin to leave holes.

However, such a method is totally unsuitable for forming holes in molded elastomeric articles. The forces exerted upon the flexible, attenuable filaments by a highly viscous, uncured elastomer entering a mold at between 1000 and 3000 psi (703 and 2109 kg/sq. cm) would distort and displace such filaments within the mold and result in holes of a nonuniform size and location.

Kossett U.S. Patent No. 4,050,667 discloses a method of molding a tubular article in which a curved core insert made of wire is attached to a mold by its ends and is used to form a hole in a molded polymer piece. The wire is removed from the molded piece by pulling the wire linearly from the piece, leaving a uniform hole through it. Again, such a molding technique is unsuitable for forming the relatively fine holes needed for the aforementioned flow controls, since the viscous, uncured polymer entering the mold at high pressure would bend a wire insert attached to the mold in the manner shown in Kossett.

Accordingly, there is a need for a method for molding articles having small diameter holes from elastomeric material which is highly viscous in the uncured state and requires a relatively high injection pressure. Such a method should be suitable for forming holes of a diameter less than 0.020 inches (0.508 mm) in an elastomer wafer which are of an accurately predetermined and consistently reproducible size and diameter.

-4-

The present invention provides a method of producing a molded elastomeric article having a hole therethrough which can be as small as 0.0035 inches (0.089 mm) in diameter and yet be consistently and accurately formed in a number of articles with a low rate of rejection. Furthermore, the method does not require molds having delicate pins that may bend or break during use.

According to one embodiment of the present invention, a method for forming a molded elastomeric article is characterized by the steps of selecting a relatively fine filament made of a material which is effectively nonattenuable and possesses a high tensile strength, placing the filament under tension in a mold, injecting uncured elastomeric material into the mold about the filament at a high pressure so that the filament is embedded in the material, curing the material and drawing the filament from the cured elastomeric material completely so that a hole is formed through it. The hole through the molded and cured article corresponds in diameter to the diameter of the wire used in the molding process.

Although the description of the preferred embodiment in this specification refers to the method as it is used to form wafer thin, disc-shaped fluidic restrictors of elastomeric material having fine holes formed therethrough, the method may be utilized to form holes of small and consistently uniform size through molded articles having a variety of shapes and materials. Furthermore, a plurality of filaments may be placed in close proximity to each other and molded in a single article, then withdrawn from the article to form a plurality of holes through it.

Since the filament is drawn from the molded article to leave a uniform hole through it, it is preferable to select a filament having a smooth outer surface. A preferred filament is stainless steel wire which possesses sufficient tensile strength and resistance to attenuation at diameters as small as 0.0035 inches (0.089 mm). However, other materials such as glass filaments may be used and not depart from the scope of the invention, provided they have a melting point above the curing temperature of the elastomeric, sufficient tensile strength and sufficient resistance to attenuation. The filaments may have a variety of shapes in cross section, such as round, oval, square, or angular.

If the finished article is to be formed into disc-shaped fluidic restrictors, a mold is used which comprises upper and lower mold halves of conventional construction, each defining a semi-cylindrical mold cavity. The filament is placed across the mold cavity of one of the mold halves and held in tension so that it is parallel to a longitudinal dimension of the mold cavity and centered across its width. The upper and lower mold halves are brought together by a hydraulic press or other well known means, and the filament is held under tension sufficient to resist bending in response to contact with the uncured elastomer. Uncured elastomeric material is injected into the mold cavity and forms a cylinder about the wire filament.

After the material has been cured by heating, the mold halves are separated and the article is removed with filament protruding from its ends. The wire filament is drawn from the molded article lengthwise, leaving a small but uniform hole through it. The article may then be

0212013

-6-

sliced by knife trimming, guillotine, lathe cutting, or other known methods into thin wafers, each having a uniform hole through it. The filament material should be sufficiently nonattenuable to resist necking down or reducing in diameter when placed under tension in the mold. Otherwise, the filament will reduce in diameter, resulting in a molded article with an undersized hole.

The elastomeric material which can be utilized in the method can have a variety of compositions. Any type of elastomeric material which is capable of being molded is suitable. Examples would be nitrile rubbers, silicone and fluorosilicones, fluorocarbons, and E-P rubbers.

Accordingly, it is an object of the present invention to provide a method for forming a molded article of an elastomer which is highly viscous in the uncured state, the article having a small diameter hole through it of a uniform and predetermined size; a method of forming holes in molded articles such that a plurality of such articles can be made in which each article has substantially the same size hole; a method which does not require expensive equipment, delicate molds, or chemicals that may be dangerous to a user; and a method for forming an elastomeric article in which a hole can be formed therethrough as small as 0.0035 inches (0.089 mm) in diameter.

In order that the present invention may be more readily understood, reference will now be made to the accompanying drawings, in which:-

Fig. 1 is a somewhat schematic sectional elevation of molding apparatus for performing the method of the preferred embodiment of the invention in which upper and lower mold halves are separated and a filament is positioned between them;

Fig. 2 is a sectional elevation of the molding apparatus of Fig. 1 in which the upper and lower mold halves have been compressed together and in which elastomeric material is being forced into the mold;

Fig. 3 is a sectional elevation of the apparatus of Fig. 1 in which the upper and lower mold halves have been separated and the molded article is removed from the mold;

Fig. 4 is a perspective view of the molded article shown in Fig. 3 in which the filament has been drawn from the article;

Fig. 5 is a perspective view of the molded article of Fig. 4 in which the article has been separated into thin wafers;

Fig. 6 is an enlarged side elevation of a wafer shown in Fig. 5;

Fig. 7 is a side elevation, in section, of a wafer mounted in a section of conduit and used as a flow control; and

Fig. 8 is the side elevation of Fig. 7 in which the wafer is deformed against a seat by an upstream flow pressure.

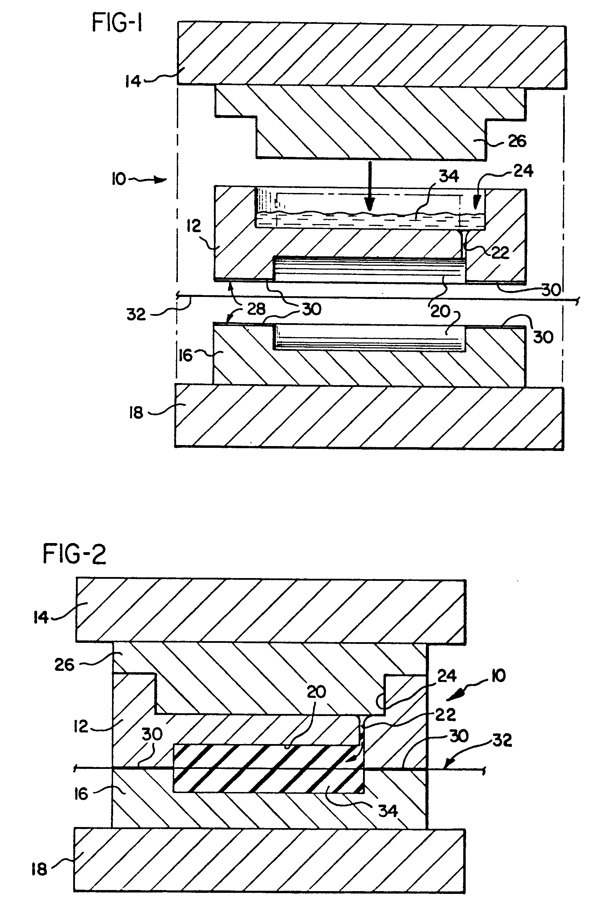

As shown in Fig. 1, the method of the preferred embodiment is performed with a molding device, generally designated 10, of well known design. The device 10 includes an upper mold half 12 and heated platen 14, and a lower mold half 16 attached to a heated platen 18. The mold halves 12,16 and platens 14,18 are actuated by hydraulic apparatus (not shown) of well known construction so that the mold halves are displaced toward and away from each other during the molding process. Each mold half 12,16 defines a semi-cylindrical portion of a mold cavity 20 such that, when the upper and lower mold halves are brought together, the mold cavity is cylindrical in shape. It should be understood that the cavity 20 may be any shape; the cylindrical shape is for purposes of illustration.

The upper mold half 12 includes a sprue 22 for injecting uncured elastomeric material from a recess or pot 24 formed in the mold half. The upper heated platen 14 includes a piston 26 mounted for reciprocation within the pot 24 and shaped to conform to the contour of the pot. It should be understood that the description of the molding device 10 is general in nature and that a variety of well known elastomeric molding devices may be employed without departing from the scope of the invention.

The upper and lower mold halves 12,16 include mating surfaces 28 which are positioned to abut each other when the mold 10 is closed (Fig. 2). Surfaces 28 each define a pair of notches 30 at the ends of the mold cavity. A filament 32 is positioned between the upper and lower mold halves 12,16 and placed lengthwise along the mold cavity so that it rests within the notches 30. It is preferable to hold the filament 32 taut once it has been positioned between the mold halves 12,16. Once the filament 32 has been placed so that it engages the notches 30, the molding process may begin.

-9-

Uncured elastomeric materal 34 is placed within the pot 24. The elastomeric material 34 may be E-P rubbers, nitrile rubbers, silicones or fluorosilicones, or fluorocarbons. All of these materials exhibit a high viscosity in the uncured state. Typically, such uncured materials have minimum torques of between 2 and 20 in.-lbs. (3.32 and 33.2 kg-m).

As shown in Figs. 1 and 2, actuating apparatus (not shown) urges the platens 14,18 together to force the upper and lower mold halves 12,16 together to close the mold cavity 20 and clamp the filament 32 between them. At the same time, the piston 26 is activated to force the uncured elastomeric material 34 within the pot 24 through the sprue 22 and into the mold cavity 20. Typically, pressures of between about 1000 and about 3000 psi (703 and 2109 kg/sq. cm) are required. Within the cavity 20, the elastomeric material forms a cylindrical body which surrounds the filament 32. The elastomeric material 34 is now heated and cured within the mold 20, typically to a temperature of between about 300°F and about 450°F (149°C and 232°C), while the molding pressure is maintained.

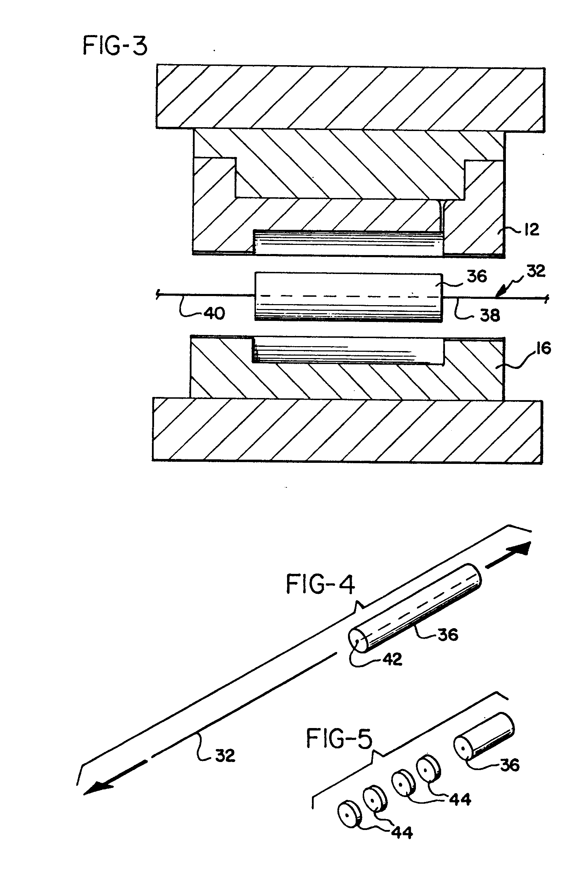

As shown in Fig. 3, the upper and lower mold halves 12,16 are separated after the injection step is completed and the elastomeric material has cured. As used herein, the term "cured" shall mean any type of process whereby the elastomeric compound is vulcanized. The molded article 36 is then removed from the mold cavity 20. It is preferable to size the length of the filament 32 such that, after the molding process is completed, portions 38,40, of the filament protrude from the ends of molded article 36.

-10-

As shown in Fig. 4, the final step of the process consists of drawing the filament 32 entirely from the molded article 36 thereby forming a hole 42 of uniform diameter along the length of the article. To effect this step, it may be necessary to grasp at least one of the protruding portions 38,40 and the article 36 to separate the filament from the article. It may be desirable to coat the filament 32 with a release agent, such as wax or other well-known release agents, prior to the insertion of the filament between the upper and lower mold halves 12,16 (Fig. 1) to facilitate the removal of the filament from the molded article.

Due to the nature of the material 34 injected into the mold cavity 20, it is necessary to employ a filament 32 having a high tensile strength and resistance to attenuation through a range of temperatures including the curing temperature of the elastomer, at diameters as small as 0.0035 inches (0.089 mm). The high tensile strength is needed so that the filament 34 can be placed under sufficient tension to resist being bent or deformed as the viscous uncured elastomer 34 is injected into the mold cavity 20. The filament 34 should also resist attenuation while under this tension, so that the holes formed will be of a uniform and predictable size. Suitable materials would be stainless steel and fiberglass. Although such materials will attenuate significantly at a predetermined tensile force, the tension required to resist bending during the injection step is much less than this predetermined force. Hence, such filaments may be described as "effectively nonattenuable" since the tensile force applied during the process of the invention will not cause the filament to attenuate sufficiently to measurably affect the size of the hole formed.

In an actual test of the process of the invention, fluorosilicone was maintained at a molding temperature of 86°F (30°C) in a pot similar to that shown in Fig. 1, which was connected to a two-piece, cylindrical mold cavity. The mold cavity had a length of 1.44 inches (36.58 mm) and a diameter of 0.156 inches (3.96 mm), with a volume of 0.027 cubic inches (.450 cubic mm). A filament of stainless steel wire having a diameter of approximately 0.005 inches (0.13 mm) was stretched across the mold and held under tension. The uncured elastomer was injected into the mold at a pressure of 2000 psi (1406 kg/sq. cm), and the fill time was approximately 15-20 seconds. The molded article was cured in the mold for 2 minutes at 392°F (200°C), and the pressure maintained.

The cured article was then removed from the mold and subjected to a supplemental post cure at 392°F (200°C) for seven hours. Subsequent to this post cure, the filament was withdrawn from the molded article with a force of 1.5 lbs. (680 gm). This process produced a cylinder of elastomeric material having a central, longitudinal hole of approximately 0.005 inches (0.13 mm) in diameter.

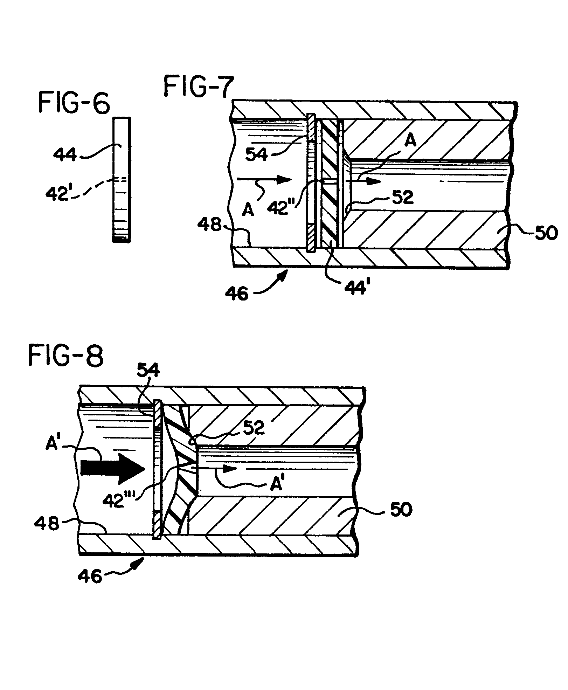

If fluidic restrictors are to be formed having a wafer shape, the molded article 36 is separated into wafers 44 as shown in Fig. 5 by well known methods such as lathe cutting, knife trimming, and guillotining. As shown in Fig. 6, a wafer 44 is disc-shaped and may have a hole 42' of a diameter as small as 0.0035 inches (0.089 mm). The thickness of the wafer 44 may be as small as 0.020 inches

-12-

(0.508 mm) or as large as 1 inch (2.54 cm) or more. The diameter of the wafer itself may range from 0.060 inches (1.524 mm) to whatever diameter is desired for the contemplated use of the wafer. It is to be understood that the wafer 44 could have any exterior shape, such as oval, square, eccentric, etc.

A typical application of such a wafer 44 (Fig. 7) is shown in Figs. 7 and 8, where the wafer is used as a flow control 44'. The flow control 44' is utilized in a conduit section 46 of well known design having an upstream portion 48 and a relatively constricted downstream portion 50 which defines a frusto-conical seat 52. The control 44' is positioned adjacent the seat 52 and is retained in that location by means such as a snap ring 54. The snap ring 54 is spaced from the seat 52 a distance greater than the thickness of the control 44' to permit deformation of the control under pressure to conform to the contour of the seat 52.

As shown in Fig. 7, the control 44' is relatively undeformed under conditions in which there is relatively little flow pressure in the upstream portion 48 of the section 46 in the direction of arrows A, and the hole 42" formed in the control 44 is undeformed. Should the flow pressure increase in the upstream portion 48 of the section 46, the control 44' is urged against the seat 52 and begins to conform to the frusto-conical contour of the seat. As the flow pressure increases further in the direction of arrow A', the control 44' assumes the position shown in Fig. 8 in which the control conforms completely to the seat 52 and the hole 42'" becomes distorted.

-13-

The distorted hole 42'" has a frusto-conical shape and an effective diameter less than the undeformed hole 42" in Fig. 7. Thus, as the control is deformed from its shape in Fig. 7 to its shape in Fig. 8 in response to increasing flow pressure, the effective diameter of the hole decreases from its size in Fig. 7 to its size in Fig. 8. The volume flow rate through the section 46 is thereby maintained within a predictable and relatively narrow range of values for a given range of flow pressures.

If an elastomeric material is used in which the hole formed in the molded article may shrink in size as the article cools after curing, the filament may be sized slightly larger than the desired hole to compensate for the anticipated shrinkage. The resultant hole can then be formed having a predictable and repeatable diameter.

-14-

## CLAIMS

1. A method for injection molding an elastomeric article (36) to form a relatively small and closely-toleranced hole (42) therethrough in which uncured elastomeric material (34) is heated and injected under relatively high pressure into a mold cavity (20), characterized by

selecting a relatively fine filament (32) made of an effectively nonattenuable material having a relatively high tensile strength;

positioning said filament such that said filament extends through said mold;

placing said filament under tension during injection of said uncured elastomer sufficient to resist bending thereof in response to contact with said uncured elastomer in said mold;

curing said elastomeric material by heating said material and maintaining said high pressure; and

drawing said filament from said cured elastomeric material (36) completely such that a hole (42) is formed therethrough.

2. A method as claimed in claim 1 further comprising the steps of separating said cured elastomeric material (36) into wafers (44) after said drawing step.

3. A method as claimed in claims 1 or 2 wherein said relatively high pressure is between about 1000 and about 3000 psi (703 and 2109 kg/sq. cm).

-15-

4.      A method as claimed in any of the preceeding claims wherein said injecting step includes the initial step of maintaining said material (34) at a temperature of about 86°F (30°C) and said curing step includes heating said material to a temperature of between about 300°F and about 450°F (218°C and 232°C).

5.      A method as claimed in any of the preceeding claims wherein said elastomeric material (34) is selected from the group consisting of E-P rubbers, nitrile rubbers, silicones, fluorosilicones, and fluorocarbons.

6.      A method as claimed in any of the preceeding claims wherein said filament (32) is made from stainless steel.

7.      A method as claimed in any of the preceeding claims wherein said filament (32) has a diameter of between 0.0035 inches and 0.025 inches (0.089 mm and 0.635 mm).

8.      A method as claimed in any of the preceeding claims wherein said filament (32) has a relatively smooth outer surface.

FIG-I

FIG-2

FIG-3

FIG-4

FIG-5

FIG-6

FIG-7

44

42'

54

A

42"

A

52

48

46

44'

50

FIG-8

54

A'

42'''

52

A'

48

50

46